# EUROPEAN PATENT SPECIFICATION

(11) **EP 1 159 905 B1**
(45) Date of publication and mention of the grant of the patent: **27.07.2005**
(21) Application number: 01302076.3
(22) Date of filing: 07.03.2001
(51) Int. Cl.: A47J 27/21

(54) **A method of securing articles and an electric kettle made by such a method**
Verfahren zum Sichern von Artikeln und durch ein solches Verfahren hergestellter elektrischer Wasserkocher
Procédé de fixation d'articles et bouilloire électrique réalisée selon ce procédé

(30) Priority: 31.05.2000 GB 0013205
(43) Date of publication of application: 05.12.2001
(73) Proprietor: Better Electrical Products (HK) Company Limited, Fotan Shatin New Territories Honk Kong (CN)
(72) Inventor: Chan, Tat 9/F., Fotan Industrial Centre, Fotan Shatin New Territories, Hong Kong (CN)
(74) Representative: Watkin, Timothy Lawrence Harvey

(56) References cited:
- EP-A- 0 159 149
- DE-U- 29 513 124
- GB-A- 2 337 194

## Description

This invention relates to a method of securing a plurality of articles, and an electric kettle made by such a method. Such an invention relates more particularly to the provision of an electric kettle with a water gauge.

There are in existence a larger variety of electric kettles. Most such electric kettles do not include any water gauge whereby a user may inspect the amount of water in the kettles. In particular, in electric kettles having a metal housing, it has not thus far been technically feasible to incorporate a water gauge which, in order to be non-opaque to allow inspection of the interior of the housing, has to be made of a plastics material. However, given the repeated heating up and cooling down of the electric kettle, there exists the problem of ensuring that the engagement between the water gauge and the metal housing is water-tight.

German Utility Model Document No. DE 295 13 124 U1 discloses a kettle with a steel container and an ascending pipe made of a transparent and heat-proof plastic. The wall of the steel container is provided with a borehole at the lower end area of the ascending pipe, and in its upper area, in which a lower connecting pipe or an upper connecting pipe engages with the insertion of a heat-proof packing. Both connecting pipes are radially spaced apart from the ascending pipes, and mechanically rigidly link it with the container. The ascending pipe communicates with the inside of the container through the lower connecting pipe. The upper connecting pipe makes it possible to seal the upper end of the ascending pipe. The two connecting pipes are best moulded to the ascending pipe.

British Patent Document No. GB 2 155 767 A, which would form the basis for the two-part form of the independent claim hereto, discloses a water heating vessel having water level indicating means comprising a fixed member secured to a wall of the vessel to at least partially occupy an elongate opening in the wall. The fixed member comprises an elongate transparent or translucent partition opposite sides of which provide an external face, visible at the exterior of the vessel, and an internal face at least partially exposed to the interior of the vessel. The fixed member and the wall are constructed and arranged so that thermal effects, caused by heating of water in the vessel, can cause water to move vertically in contact with the internal face when the vessel contains at least a predetermined minimum quantity of water, to ensure that boiling of the water in the vessel will sterilize the indicator means.

It is an object of the present invention to provide a method of securing a metal housing with a water gauge and a backing element, and an electric kettle made by such a method, in which the above shortcomings are mitigated, or at least to provide a useful alternative to the public.

According to a first aspect of the present invention, there is provided a method of securing a metal housing member with a water gauge made of a plastics material and a backing element made of a plastics material, including fixedly securing said water gauge with said backing element, contacting and fixedly securing the housing member with said water gauge, and positioning a sealing member between and in contact with said housing member and said backing element, characterized in that said sealing member is in contact with said water gauge to thereby form a water-tight seal among said housing member, said backing element and said water gauge.

According to a second aspect of the present invention, there is provided an electric kettle including a metal housing member, a non-opaque water gauge and a backing member made of a plastics material, wherein said water gauge and said backing member are fixedly secured with each other, wherein said housing member contacts and is fixedly secured with said water gauge, and wherein a sealing member is positioned between and in contact with said housing member and said backing member, characterized in that said sealing member is in contact with said water gauge to thereby form a water-tight seal among said housing member, said backing member and said water gauge.

Embodiments of the present invention will now be described, by way of examples, and with reference to the accompanying drawings, wherein:-
Fig. 1 shows a side view of an electric kettle according to the present invention;
Fig. 2A shows a cross-sectional view of a first type of securing arrangement according to the present invention, taken along the line A-A of Fig. 1;
Fig. 2B shows an enlarged view of the encircled portion shown in Fig. 2A;
Fig. 2C shows an exploded view of the parts shown in Fig. 2B;
Fig. 3A shows a cross-sectional view of a second type of securing arrangement according to the present invention, taken along the line A-A of Fig. 1;
Fig. 3B shows an enlarged view of the encircled portion shown in Fig. 3A;
Fig. 3C shows an exploded view of the parts shown in Fig. 3B;
Fig. 4A shows a cross-sectional view of a third type of securing arrangement according to the present invention, taken along the line A-A of Fig. 1;
Fig. 4B shows an enlarged view of the encircled portion shown in Fig. 4A;
Fig. 4C shows an exploded view of the parts shown in Fig. 4B;
Fig. 5A shows a cross-sectional view of a type of securing arrangement not according to the present invention, taken along the line A-A of Fig. 1;
Fig. 5B shows an enlarged view of the encircled portion shown in Fig. 5A;
Fig. 5C shows an exploded view of the parts shown in Fig. 5B;
Fig. 6A shows a cross-sectional view of another type of securing arrangement not according to the present invention, taken along the line A-A of Fig. 1;
Fig. 6B shows an enlarged view of the encircled portion shown in Fig. 6A;
Fig. 6C shows an exploded view of the parts shown in Fig. 6B;
Fig. 7A shows a cross-sectional view of a fourth type of securing arrangement according to the present invention, taken along the line A-A of Fig. 1;
Fig. 7B shows an enlarged view of the encircled portion shown in Fig. 7A;
Fig. 7C shows an exploded view of the parts shown in Fig. 7B;
Fig. 8A shows a cross-sectional view of a fifth type of securing arrangement according to the present invention, taken along the line A-A of Fig. 1;
Fig. 8B shows an enlarged view of the encircled portion shown in Fig. 8A;
Fig. 8C shows an exploded view of the parts shown in Fig. 8B; and
Fig. 9 shows an enlarged view of a sixth type of securing arrangement according to the present invention.

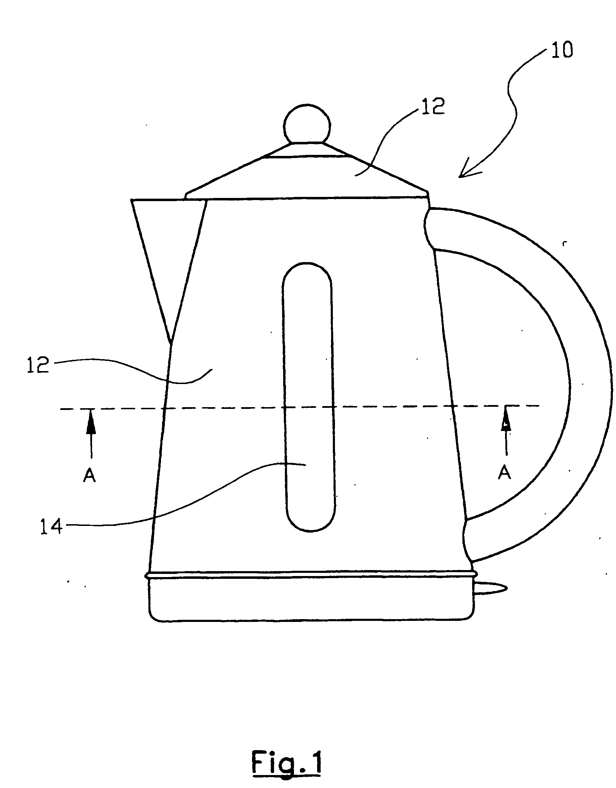

An electric kettle made in accordance with the present invention is shown in Fig. 1 as generally designated as 10. The kettle 10 includes a lid releasably engageable with a stainless steel body 12 for containing liquid (e.g. water) to be boiled. Provided on the body 12 is a non-opaque (e.g. transparent) plastics water gauge 14 through which a user may inspect the level, and thus the amount, of water in the body 12. The water gauge 14 may include an index or scale for indicating the amount of water in the body 12 of the kettle 10. The water gauge 14 may be made of polypropylene or polycarbonate. In order to ensure that the engagement between the water gauge 14 and the body 12 is water-tight, six different arrangements are provided.

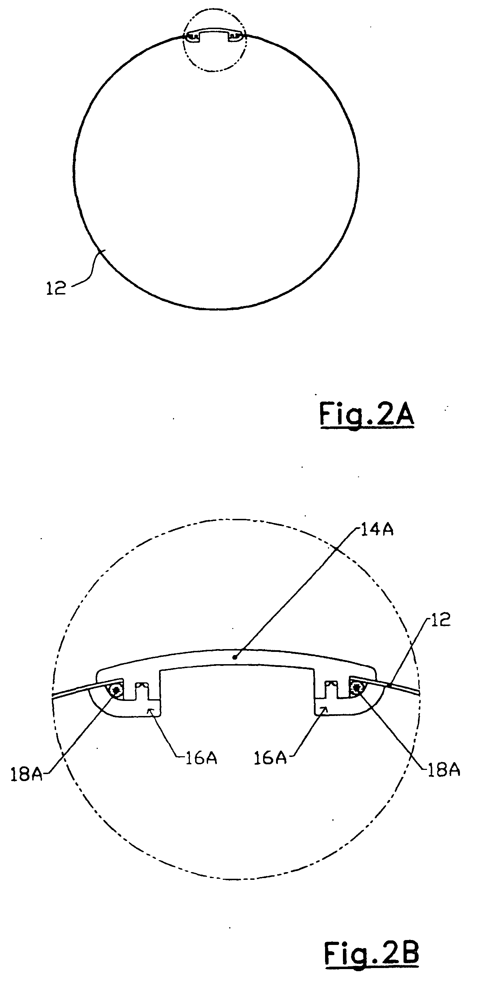

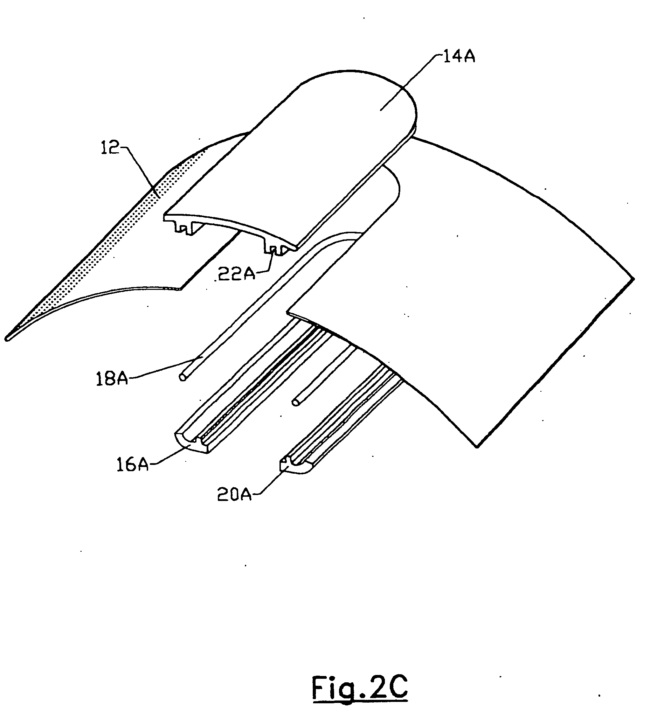

According to a first arrangement in accordance with the present invention, and as shown in Figs. 2A to 2C, the stainless steel body 12 is secured with both a first type of water gauge 14A, a first type of backing element 16A, and a first type of sealing ring 18A to form a water-tight seal. The backing element 16A may be made of polypropylene or polycarbonate. If both the water gauge 14A and the backing element 16A are made of polypropylene, they may be fixedly secured with each other by high-frequency welding or hot-plate welding. If both of them are made of polycarbonate, they may be fixedly secured with each other by high-frequency welding, hot-plate welding or ultra-sonic welding. The endless silicon rubber sealing ring 18A is positioned among and in contact with the housing 12, the water gauge 14A and the backing element 16A. The silicon rubber sealing ring 18A is circular in cross section. It can be seen that the backing element 16A includes a ridge 20A which is received within a channel 22A of the water gauge 14A. It can be seen that, as distinct from the disclosure of GB 2 155 767 A, in which the seal is only between and in contact with the insert and the wall, but not with the fixed member, which forms part of the indicating means, in the arrangement discussed above, the sealing ring 18A is positioned among and in contact with the housing 12, the water gauge 14A and the backing element 16A.

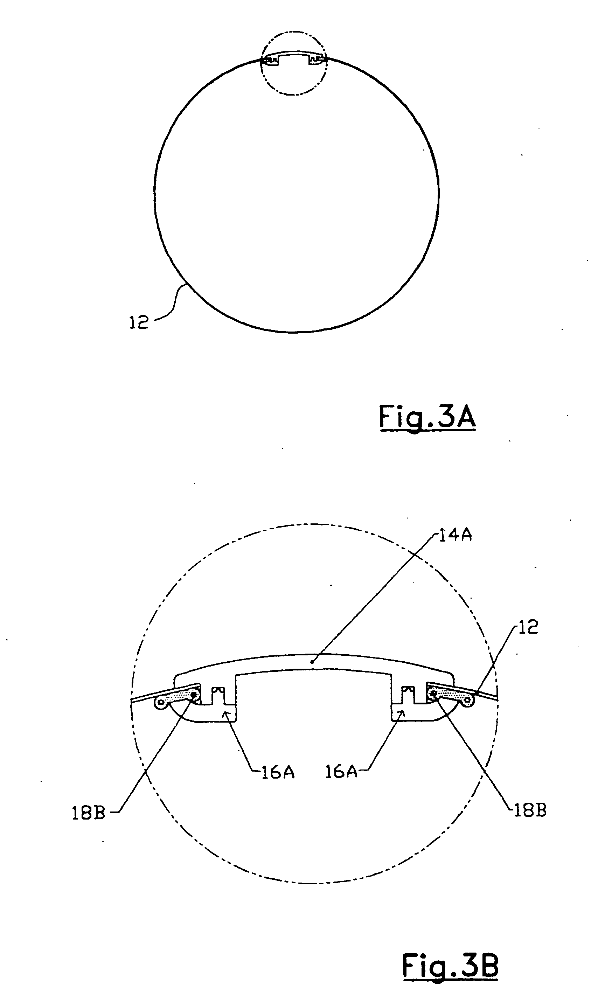

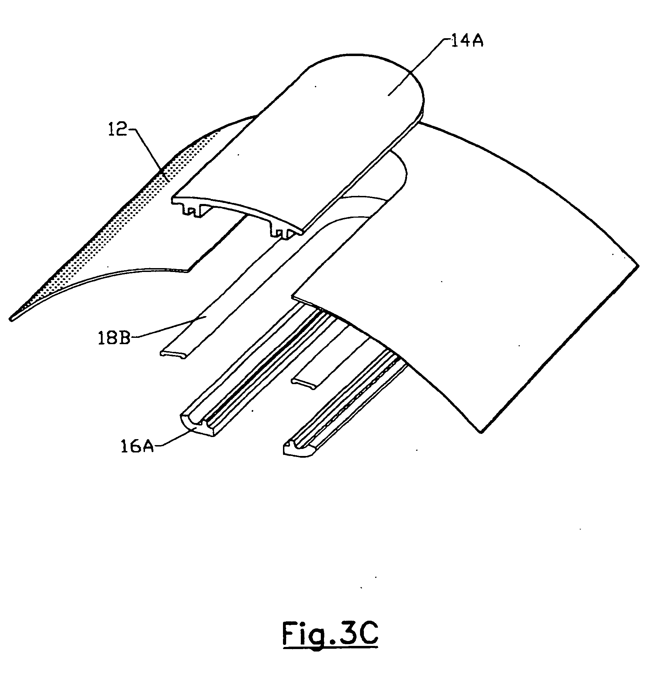

Figs. 3A to 3C show a second arrangement according to the present invention, whereby the stainless steel body 12 is fixedly secured with both the first type of water gauge 14A and the first type of backing element 16A, to form a water-tight seal. The main difference in this arrangement is a sealing ring 18B. This sealing ring 18B is elongate in cross section with two flat surfaces. It can be seen in Fig. 3B that one flat surface abuts an inner surface of the steel body 12, while another flat surface abuts the backing element 16A.

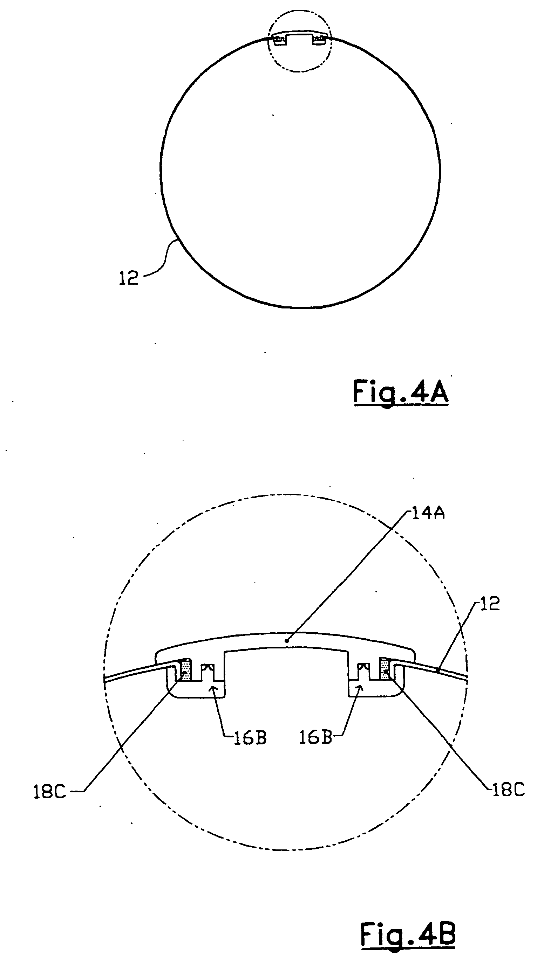

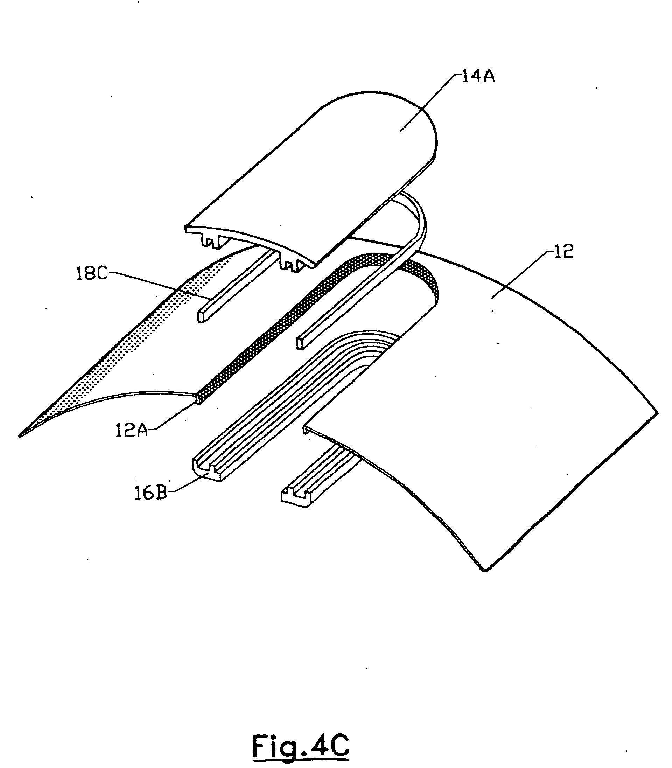

Figs. 4A to 4C show a third arrangement according to the present invention, whereby the stainless steel body 12 is fixedly secured with the first type of water gauge 14A, a second type of backing element 16B and a third type of sealing ring 18C, to form a water-tight seal. In this arrangement, the portion of the body 12 to be engaged with the backing element 16B is bent. This bent portion 12A is received within a cavity between the water gauge 14A, the backing element 16A and the sealing ring 18C. As can be seen, the sealing ring 18C is substantially rectangular in cross-section, and is in contact with the water gauge 14A, the backing element 16A and the bent portion 12A of the body 12.

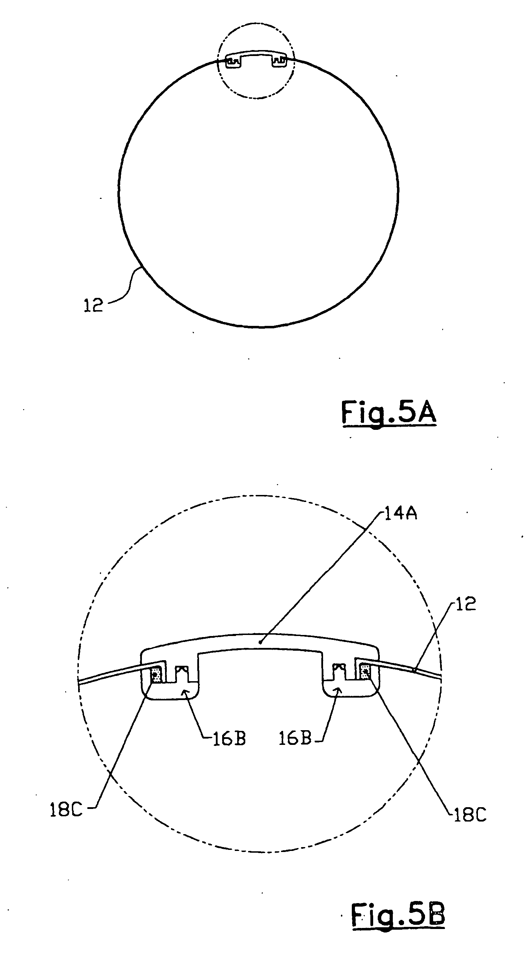

Fig. 5A to 5C show an arrangement not according to the present invention; whereby the stainless steel body 12 is fixedly secured with the first type of water gauge 14A, the second type of backing element 16B and the sealing ring 18C, to form a water-tight seal. In the arrangement shown in Fig. 4A to 4C, the sealing ring 18C is in contact with the outer surface of the body 12, the water gauge 14A and the backing element 16B, whereas in the arrangement shown in Fig. 5A to 5C, the sealing ring 18C is in contact with the inner surface of the body 12 and the backing element 16B, but is out of contact with the water gauge 14A.

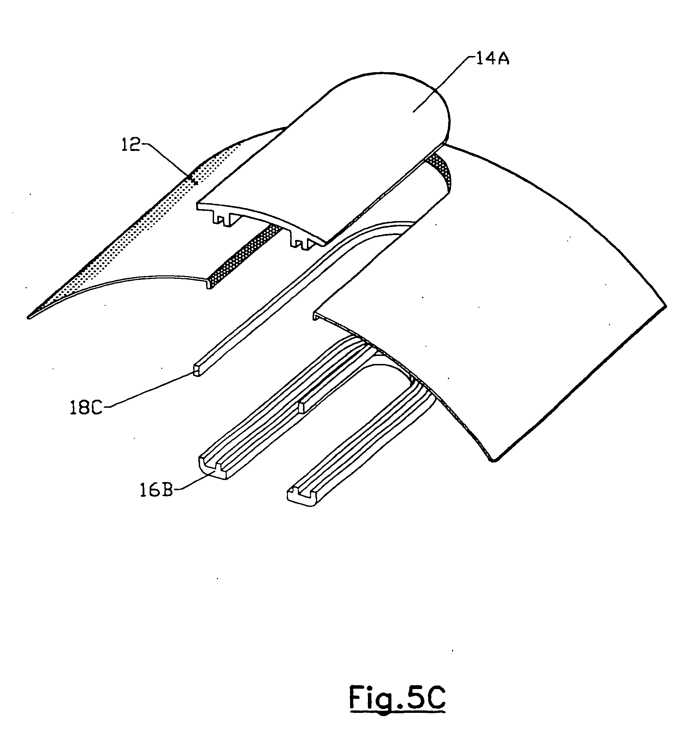

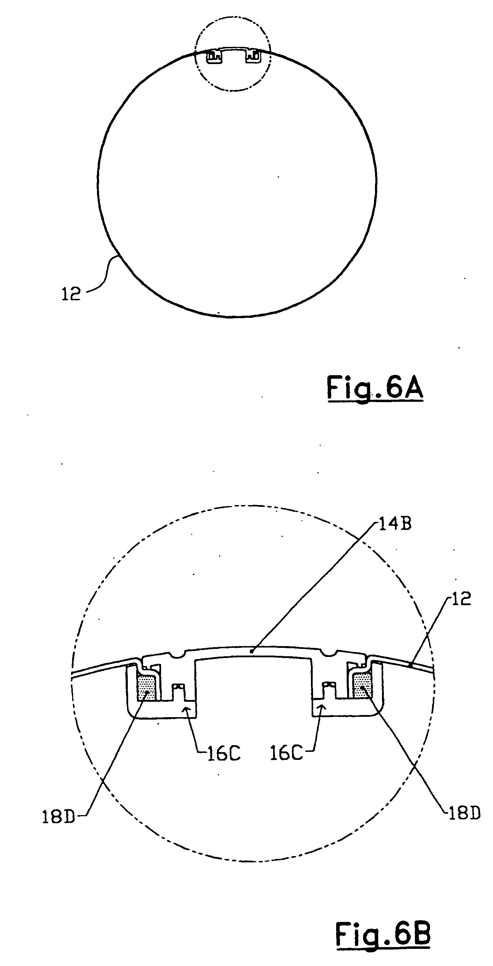

Fig. 6A to 6C show another arrangement not according to the present invention, whereby the stainless steel body 12 is fixedly secured with a second type of water gauge 14B, a third type of backing element 16C and a fourth type of sealing ring 18D, to form a water-tight seal. It can be seen in particular that the body 12 includes a stepped portion 12B, which is engaged with, and is received within a cavity among, the water gauge 14B, the backing element 16C and the sealing ring 18D. To enhance the aesthetic appearance of the water gauge 14B, a recess 24 is formed on the outer surface of the water gauge 14B.

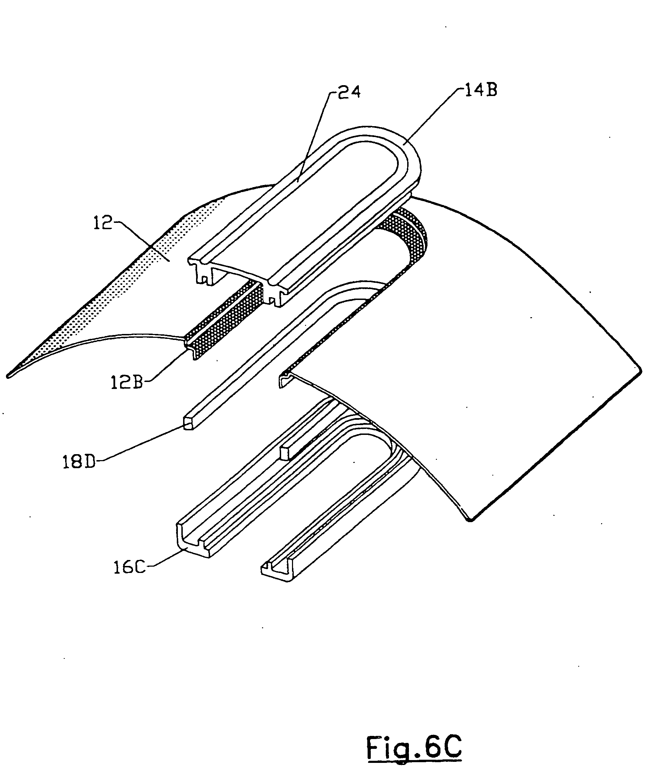

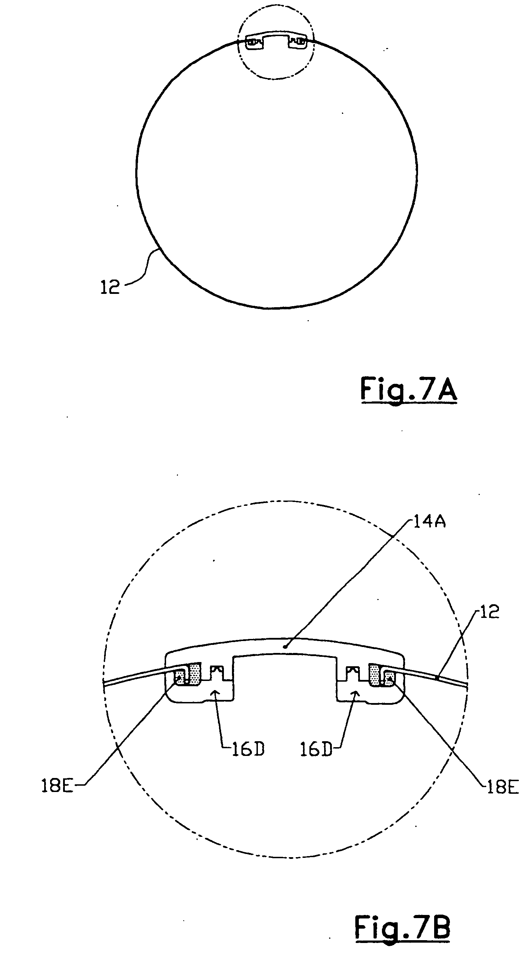

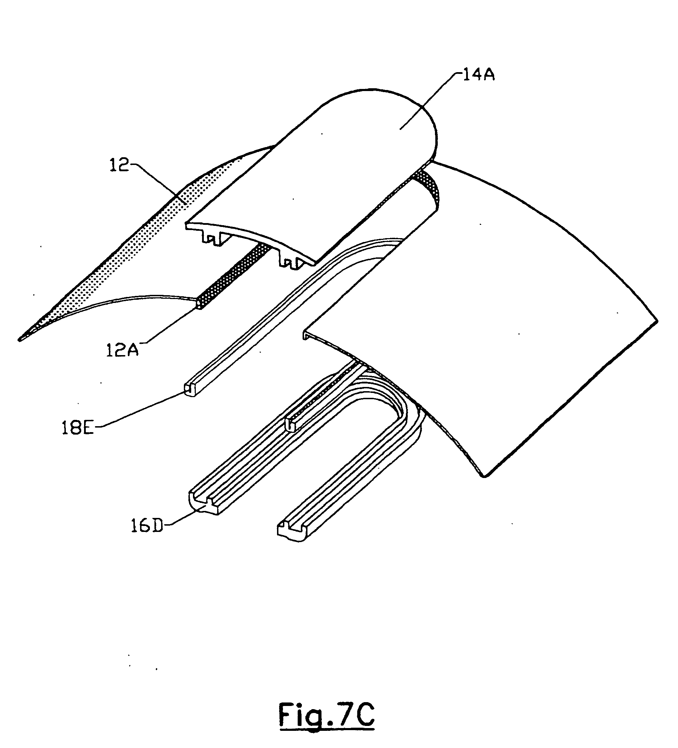

Turning to Figs. 7A to 7C, such show a fourth arrangement according to the present invention, whereby the housing 12 is fixedly secured with the first type of water gauge 14A, a fourth type of backing element 16D and a fifth type of sealing ring 18E, to form a water-tight seal. In this arrangement, the sealing ring 18E includes two arms and is of a substantially U-shaped cross section. The bent portion 12A of the housing 12 is received within the cavity between the arms of the sealing ring 18E.

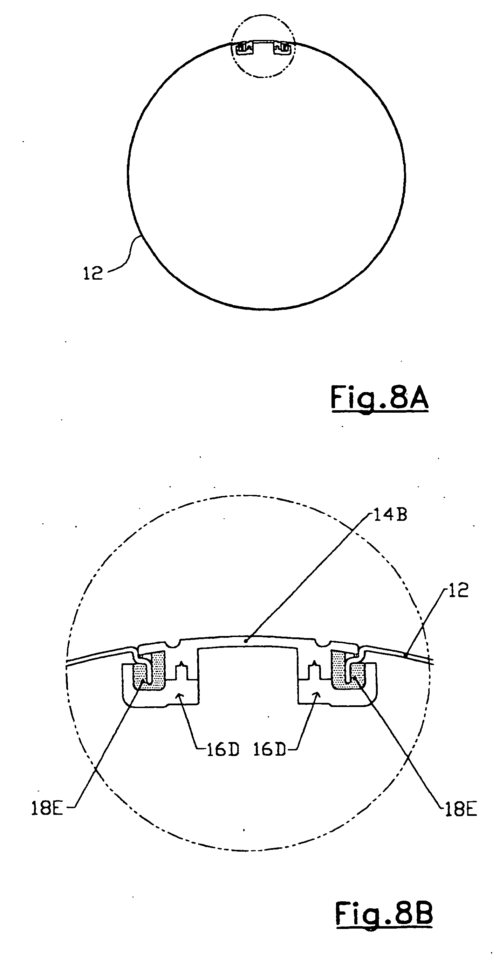

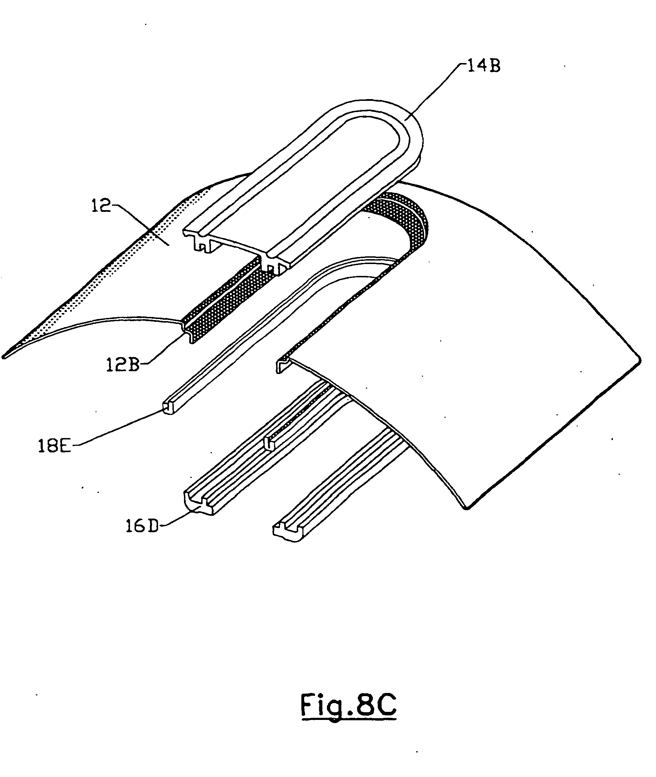

Figs. 8A to 8C show a fifth arrangement according to the present invention, whereby the housing 12 is fixedly secured with the second type of water gauge 14B, the fourth type of backing element 16D, and the fifth type of sealing ring 18E, to form a water-tight seal. In this arrangement, the housing 12 includes a stepped portion 12B, which is received within the cavity between the arms of the sealing ring 18E.

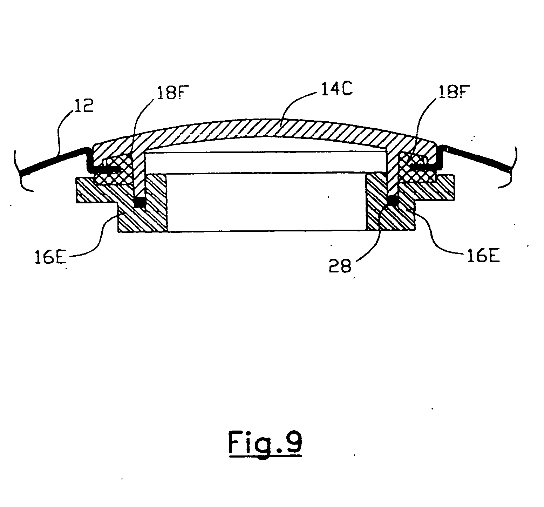

Turning now to Fig. 9, such shows a sixth arrangement according to the present invention, whereby the housing 12 is fixedly secured with a third type of water gauge 14C, a fifth type of backing element 16E, and a sixth type of sealing ring 18F, to form a water-tight seal. In this arrangement, the sealing ring 18F is also substantially U-shaped in cross-section, and receives a bent portion of the housing 12 sidewardly. In addition, an iron wire ring 28 is positioned between the water gauge 14C and the backing element 16E.

## Claims

1. A method of securing a metal housing member (12) with a water gauge (14) made of a plastics material and a backing element (16A, 16B, 16D, 16E) made of a plastics material, including fixedly securing said water gauge with said backing element, contacting and fixedly securing the housing member with said water gauge, and positioning a sealing member (18A, 18B, 18C, 18E, 18F) between and in contact with said housing member and said backing element, **characterized in that** said sealing member is in contact with said water gauge to thereby form a water-tight seal among said housing member, said backing element and said water gauge.

2. A method according to Claim 1 further **characterized in that** said sealing member includes an endless silicon rubber sealing ring (18A, 18B, 18C, 18E, 18F).

3. A method according to Claim 1 or 2 further **characterized in that** said metal is stainless steel.

4. A method according to any of the preceding claims further **characterized in that** said plastics material is polypropylene.

5. A method according to Claim 4 further **characterized in that** said water gauge and said backing element are fixedly secured to each other by high frequency welding or hot-plate welding.

6. A method according to any one of Claims 1 to 3 further **characterized in that** said plastics material is polycarbonate.

7. A method according to Claim 6 further **characterized in that** said water gauge and said backing element are fixedly secured to each other by high frequency welding, hot-plate welding or ultra-sonic welding.

8. A method according to any of the preceding claims further **characterized in** including the steps of forming at least a channel member (22A) on said water gauge; forming at least a ridge member (20A) on said backing element; and placing said ridge member of said backing element in said channel member of said water gauge.

9. A method according to any of the preceding claims further **characterized in** including the steps of forming at least a bent portion (12A) on said housing member; and placing said bent portion of said housing member within a cavity formed between said water gauge and said backing element.

10. A method according to any of the preceding claims further **characterized in** including the steps of forming at least a stepped portion (12B) on said housing; and placing said stepped portion of said housing within a cavity formed between said water gauge and said backing element.

11. A method according to any one of Claims 2 to 10 further **characterized in that** said sealing ring is substantially circular in cross section.

12. A method according to any one of Claims 2 to 10 further **characterized in that** said sealing ring is substantially rectangular in cross section.

13. A method according to any one of Claims 2 to 10 further **characterized in that** said sealing ring is substantially U-shaped in cross section with two arm members.

14. A method according to Claim 13 further **characterized in** including the steps of forming at least a bent portion (12A) on said housing member; and placing said bent portion of said housing member in a space between the arm members of said sealing ring.

15. A method according to Claim 13 or 14 further **characterized in** including the steps of forming at least a stepped portion (12B) on said housing member; and placing said stepped portion of said housing member in a space between the arm members of said sealing ring.

16. An electric kettle (10) including a metal housing member (12), a non-opaque water gauge (14, 14A, 14B, 14C) and a backing member (16A, 16B, 16D, 16E) made of a plastics material, wherein said water gauge and said backing member are fixedly secured with each other, wherein said housing member contacts and is fixedly secured with said water gauge, and wherein a sealing member (18A, 18B, 18C, 18E, 18F) is positioned between and in contact with said housing member and said backing member, **characterized in that** said sealing member is in contact with said water gauge to thereby form a water-tight seal among said housing member, said backing member and said water gauge.

17. A kettle according to Claim 16 further **characterized in that** said sealing member includes an endless silicon rubber sealing ring (18A, 18B, 18C, 18E, 18F).

18. A kettle according to Claim 16 or 17 further **characterized in that** said metal is stainless steel.

19. A kettle according to any of Claims 16 to 18 further **characterized in that** said plastics material is polypropylene.

20. A kettle according to Claim 19 further **characterized in that** said water gauge and backing member are fixedly secured to each other by high frequency welding or hot-plate welding.

21. A kettle according to any one of Claims 16 to 18 further **characterized in that** said plastics material is polycarbonate.

22. A kettle according to Claim 21 further **characterized in that** said water gauge and backing member are fixedly secured to each other by high frequency welding, hot-plate welding or ultra-sonic welding.

23. A kettle according to any one of Claims 16 to 22 further **characterized in that** said water gauge includes at least a channel member (22A) for receiving at least a ridge member (20A) of said backing member.

24. A kettle according to any one of Claims 16 to 23 further **characterized in that** said housing member includes at least a bent portion (12A) received within a cavity formed between said water gauge and said backing member.

25. A kettle according to any one of Claims 17 to 24 further **characterized in that** said housing member includes at least a stepped portion (12B) received within a cavity formed between said water gauge and said backing member.

26. A kettle according to any one of Claims 16 to 25 further **characterized in that** said sealing ring is substantially circular in cross section.

27. A kettle according to any one of Claims 16 to 25 further **characterized in that** said sealing ring is substantially rectangular in cross section.

28. A kettle according to any one of Claims 16 to 25 further **characterized in that** said sealing ring is substantially U-shaped in cross section with two arm members.

29. A kettle according to Claim 28 further **characterized in that** said housing member includes at least a bent portion (12A) received in a space between the arm members of said sealing ring.

30. A kettle according to Claim 29 further **characterized in that** said housing member includes at least a stepped portion (12B) received in a space between the arm members of said sealing ring.

## Patentansprüche

1. Verfahren zum Sichern eines Metallgehäusebauteils (12) mit einem Wasserpegel (14), hergestellt aus einem Kunststoffinaterial, und einem Rückenelement (16A, 16B, 16D, 16E), hergestellt aus einem Kunststoffmaterial, einschließend ein festes Sichern des Wasserpegels mit dem Rückenelement, ein Kontaktieren und festes Sichern des Gehäusebauteils mit dem Wasserpegel, und ein Positionieren eines Versiegelungsbauteils (18A, 18B, 18C, 18E, 18F) zwischen und in Kontakt mit dem Gehäusebauteil und dem Rückenelement, **dadurch gekennzeichnet, daß** das Versiegelungsbauteil in Kontakt mit dem Wasserpegel ist, um dadurch eine wasserdichte Versiegelung zwischen dem Gehäusebauteil, dem Rückenelement und dem Wasserpegel zu bilden.

2. Verfahren nach Anspruch 1, weiter **dadurch gekennzeichnet, daß** das Versiegelungsbauteil einen endlosen Silikonkautschukversiegelungsring (18A, 18B, 18C, 18E, 18F) einschließt.

3. Verfahren nach Anspruch 1 oder 2, weiter **dadurch gekennzeichnet, daß** das Metall rostfreier Stahl ist.

4. Verfahren nach einem der vorangehenden Ansprüche, weiter **dadurch gekennzeichnet, daß** das Kunststoffmaterial Polypropylen ist.

5. Verfahren nach Anspruch 4, weiter **dadurch gekennzeichnet, daß** der Wasserpegel und das Rückenelement fest miteinander gesichert sind durch Hochfrequenzverschweißen oder Heißplattenverschweißen.

6. Verfahren nach einem der Ansprüche 1 bis 3, weiter **dadurch gekennzeichnet, daß** das Kunststoffmaterial Polycarbonat ist.

7. Verfahren nach Anspruch 6, weiter **dadurch gekennzeichnet, daß** der Wasserpegel und das Rückenelement miteinander fest gesichert sind durch Hochfrequenzverschweißen, Heißplattenverschweißen oder Ultraschallverschweißen.

8. Verfahren nach einem der vorangehenden Ansprüche, weiter **gekennzeichnet durch** ein Einschließen der Schritte eines Bildens wenigstens eines Kanalbauteils (22A) an dem Wasserpegel; eines Bildens wenigstens eines Rippenbauteils (20A) an dem Rückenelement; und eines Anordnens des Rippenbauteils des Rückenelements in dem Kanalbauteil des Wasserpegels.

9. Verfahren nach einem der vorangehenden Ansprüche, weiter **gekennzeichnet durch** ein Einschließen der Schritte eines Bildens wenigstens eines gebogenen Bereichs (12A) an dem Gehäusebauteil; und eines Anordnens des gebogenen Bereichs des Gehäusebauteils innerhalb einer Aushöhlung, die zwischen dem Wasserpegel und dem Rückenelement gebildet wird.

10. Verfahren nach einem der vorangehenden Ansprüche, weiter **gekennzeichnet durch** ein Einschließen der Schritte eines Bildens wenigstens eines abgestuften Bereichs (12B) an den Gehäuse; und eines Anordnens des abgestuften Bereichs des Gehäuses innerhalb einer Aushöhlung, die zwischen dem Wasserpegel und dem Rückenelement gebildet wird.

11. Verfahren nach einem der Ansprüche 2 bis 10, weiter **dadurch gekennzeichnet, daß** der Versiegelungsring im wesentlichen im Querschnitt kreisförmig ist.

12. Verfahren nach einem der Ansprüche 2 bis 10, weiter **dadurch gekennzeichnet, daß** der Versiegelungsring im wesentlichen im Querschnitt rechteckig ist.

13. Verfahren nach einem der Ansprüche 2 bis 10, weiter **dadurch gekennzeichnet, daß** der Versiegelungsring im wesentlichen im Querschnitt U-förmig mit zwei Armbauteilen ist.

14. Verfahren nach Anspruch 13, weiter **gekennzeichnet durch** ein Einschließen der Schritte eines Bildens wenigstens eines gebogenen Bereichs (12A) an dem Gehäusebauteil; und eines Anordnens des gebogenen Bereichs des Gehäusebauteils in einem Zwischenraum zwischen den Armbauteilen des Versiegelungsrings.

15. Verfahren nach Anspruch 13 oder 14, weiter **gekennzeichnet durch** ein Einschließen der Schritte eines Bildens wenigstens eines abgestuften Bereichs (12B) an dem Gehäusebauteil; und eines Anordnens des abgestuften Bereichs des Gehäusebauteils in einem Zwischenraum zwischen den Armbauteilen des Versiegelungsrings.

16. Elektrischer Wasserkessel (10), einschließend ein Metallgehäusebauteil (12), einen nicht-opaken Wasserpegel (14, 14A, 14B, 14C) und ein Rückenelement (16A, 16B, 16D, 16E), hergestellt aus Kunststoffmaterial, wobei der Wasserpegel und das Rückenelement fest miteinander gesichert sind, wobei das Gehäusebauteil den Wasserpegel berührt und mit diesem fest gesichert ist, und wobei ein Versiegelungsbauteil (18A, 18B, 18C, 18E, 18F) zwischen dem Gehäusebauteil und dem Rückenelement positioniert und mit diesen in Kontakt ist, **dadurch gekennzeichnet, daß** das Versiegelungsbauteil mit dem Wasserpegel in Kontakt ist, um dadurch eine wasserdichte Versiegelung zwischen dem Gehäusebauteil, dem Rückenelement und dem Wasserpegel zu bilden.

17. Wasserkocher nach Anspruch 16, weiter **dadurch gekennzeichnet, daß** das Versiegelungsbauteil einen endlosen Silikonkautschukversiegelungsring (18A, 18B, 18C, 18E, 18F) einschließt.

18. Wasserkocher nach Anspruch 16 oder 17, weiter **dadurch gekennzeichnet, daß** das Metall rostfreier Stahl ist.

19. Wasserkocher nach einem der Ansprüche 16 bis 18, weiter **dadurch gekennzeichnet, daß** das Kunststoffmaterial Polypropylen ist.

20. Wasserkocher nach Anspruch 19, weiter **dadurch gekennzeichnet, daß** der Wasserpegel und das Rückenelement fest miteinander durch Hochfrequenzverschweißen oder Heißplattenverschweißen gesichert sind.

21. Wasserkocher nach einem der Ansprüche 16 bis 18, weiter **dadurch gekennzeichnet, daß** das Kunststoffmaterial Polycarbonat ist.

22. Wasserkocher nach Anspruch 21, weiter **dadurch gekennzeichnet, daß** der Wasserpegel und das Rückenelement fest miteinander durch Hochfrequenzverschweißen, Heißplattenverschweißen oder Ultraschallverschweißen gesichert sind.

23. Wasserkocher nach einem der Ansprüche 16 bis 22, weiter **dadurch gekennzeichnet, daß** der Wasserpegel wenigstens ein Kanalbauteil (22A) zum Aufnehmen wenigstens eines Rippenbauteils (20A) des Rückenelements einschließt.

24. Wasserkocher nach einem der Ansprüche 16 bis 23, weiter **dadurch gekennzeichnet, daß** das Gehäusebauteil wenigstens einen gebogenen Bereich (12A) einschließt, der innerhalb einer Aushöhlung aufgenommen ist, die zwischen dem Wasserpegel und dem Rückenelement gebildet ist.

25. Wasserkocher nach einem der Ansprüche 17 bis 24, weiter **dadurch gekennzeichnet, daß** das Gehäusebauteil wenigstens einen abgestuften Bereich (12B) einschließt, der innerhalb einer Aushöhlung aufgenommen ist, die zwischen dem Wasserpegel und dem Rückenelement gebildet ist.

26. Wasserkessel nach einem der Ansprüche 16 bis 25, weiter **dadurch gekennzeichnet, daß** der Versiegelungsring im wesentlichen im Querschnitt kreisförmig ist.

27. Wasserkessel nach einem der Ansprüche 16 bis 25, weiter **dadurch gekennzeichnet, daß** der Versiegelungsring im wesentlichen im Querschnitt rechteckig ist.

28. Wasserkocher nach einem der Ansprüche 16 bis 25, weiter **dadurch gekennzeichnet, daß** der Versiegelungsring im wesentlichen im Querschnitt U-förmig mit zwei Armbauteilen ist.

29. Wasserkocher nach Anspruch 28, weiter **dadurch gekennzeichnet, daß** das Gehäusebauteil wenigstens einen gebogenen Bereich (12A) einschließt, der in einem Zwischenraum zwischen den Armbauteilen des Versiegelungsrings aufgenommen ist.

30. Wasserkocher nach Anspruch 29, weiter **dadurch gekennzeichnet, daß** das Gehäusebauteil wenigstens einen abgestuften Bereich (12B) einschließt, der in einem Zwischenraum zwischen den Annbauteilen des Versiegelungsrings aufgenommen ist.

## Revendications

1. Procédé de fixation d'un élément de boîtier métallique (12) ayant un indicateur de niveau d'eau (14) réalisé en matériau plastique et un élément de support (16A, 16B, 16D, 16E) réalisé en matériau plastique, comprenant la fixation dudit indicateur de niveau d'eau avec ledit élément de support, la mise en contact et la fixation de l'élément de boîtier avec ledit indicateur de niveau d' eau, et le positionnement d' un élément d'étanchéité (18A, 18B, 18C, 18E, 18F) entre et en contact avec ledit élément de boîtier et ledit élément de support, **caractérisé en ce que** ledit élément d'étanchéité est en contact avec ledit indicateur de niveau d'eau afin de former ainsi un joint étanche à l'eau entre ledit élément de boîtier, ledit élément de support et ledit indicateur de niveau d'eau.

2. Procédé selon la revendication 1, **caractérisé en outre en ce que** ledit élément d'étanchéité comprend une bague d'étanchéité sans fin en caoutchouc de silicone (18A, 18B, 18C, 18E, 18F).

3. Procédé selon la revendication 1 ou 2, **caractérisé en outre en ce que** ledit métal est de l'acier inoxydable.

4. Procédé selon l'une quelconque des revendications précédentes, **caractérisé en outre en ce que** ledit matériau plastique est du polypropylène.

5. Procédé selon la revendication 4, **caractérisé en outre en ce que** ledit indicateur de niveau d'eau et ledit élément de support sont fixés l'un sur l'autre par un soudage à haute fréquence ou par un soudage sur plaque chauffante.

6. Procédé selon l'une quelconque des revendications 1 à 3, **caractérisé en outre en ce que** ledit matériau plastique est du polycarbonate.

7. Procédé selon la revendication 6, **caractérisé en outre en ce que** ledit indicateur de niveau d'eau et ledit élément de support sont fixés l'un sur l'autre par un soudage à haute fréquence, un soudage sur plaque chauffante ou un soudage par ultrasons.

8. Procédé selon l'une quelconque des revendications précédentes, **caractérisé en outre en ce qu'**il comprend les étapes de formation d'au moins un élément de canal (22A) sur ledit indicateur de niveau d'eau ; de formation d'au moins un élément d'arête (20A) sur ledit élément de support ; et de placement dudit élément d'arête dudit élément de support dans ledit élément de canal dudit indicateur de niveau d'eau.

9. Procédé selon l'une quelconque des revendications précédentes, **caractérisé en outre en ce qu'**il comprend les étapes de formation d'au moins une partie recourbée (12A) sur ledit élément de boîtier ; et de placement de ladite partie recourbée dudit élément de boîtier dans une cavité formée entre ledit indicateur de niveau d'eau et ledit élément de support.

10. Procédé selon l'une quelconque des revendications précédentes, **caractérisé en outre en ce qu'i**l comprend les étapes de formation d'au moins une partie étagée (12B) sur ledit boîtier ; et de placement de ladite partie étagée dudit boîtier dans une cavité formée entre ledit indicateur de niveau d'eau et ledit élément de support.

11. Procédé selon l'une quelconque des revendications 2 à 10, **caractérisé en outre en ce que** ladite bague d'étanchéité possède une section transversale sensiblement circulaire.

12. Procédé selon l'une quelconque des revendications 2 à 10, **caractérisé en outre en ce que** ladite bague d'étanchéité possède une section transversale sensiblement rectangulaire.

13. Procédé selon l'une quelconque des revendications 2 à 10, **caractérisé en outre en ce que** ladite bague d'étanchéité possède une section transversale sensiblement en forme de U, avec deux éléments de bras.

14. Procédé selon la revendication 13, **caractérisé en outre en ce qu'**il comprend les étapes de formation d'au moins une partie recourbée (12A) sur ledit élément de boîtier ; et de placement de ladite partie recourbée dudit élément de boîtier dans un espace situé entre les éléments de bras de ladite bague d'étanchéité.

15. Procédé selon la revendication 13 ou 14, **caractérisé en outre en ce qu'**il comprend les étapes de formation d'au moins une partie étagée (12B) sur ledit élément de boîtier; et de placement de ladite partie étagée dudit élément de boîtier dans un espace situé entre les éléments de bras de ladite bague d'étanchéité.

16. Bouilloire électrique (10) comprenant un élément de boîtier métallique (12), un indicateur de niveau d'eau non opaque (14, 14A, 14B, 14C) et un élément de support (16A, 16B, 16D, 16E) réalisé en matériau plastique, dans laquelle ledit indicateur de niveau d'eau et ledit élément de support sont fixés l'un sur l'autre, dans laquelle ledit élément de boîtier est en contact et est fixé dans ledit indicateur de niveau d'eau, et dans laquelle un élément d'étanchéité (18A, 18B, 18C, 18E, 18F) est positionné entre et en contact avec ledit élément de boîtier et ledit élément de support, **caractérisée en ce que** ledit élément d'étanchéité est en contact avec ledit indicateur de niveau d'eau afin de former ainsi un joint étanche à l'eau entre ledit élément de boîtier, ledit élément de support et ledit indicateur de niveau d'eau.

17. Bouilloire selon la revendication 16, **caractérisée en outre en ce que** ledit élément d'étanchéité comprend une bague d'étanchéité sans fin en caoutchouc de silicone (18A, 18B, 18C, 18E,18F).

18. Bouilloire selon la revendication 16 ou 17, **caractérisée en outre en ce que** ledit métal est de l'acier inoxydable.

19. Bouilloire selon l'une quelconque des revendications 16 à 18, **caractérisée en outre en ce que** ledit matériau plastique est du polypropylène.

20. Bouilloire selon la revendication 19, **caractérisée en outre en ce que** ledit indicateur de niveau d'eau et ledit élément de support sont fixés l'un sur l'autre par un soudage à haute fréquence ou un soudage sur plaque chauffante.

21. Bouilloire selon l'une quelconque des revendications 16 à 18, **caractérisée en outre en ce que** ledit matériau plastique est du polycarbonate.

22. Bouilloire selon la revendication 21, **caractérisée en outre en ce que** ledit indicateur de niveau d'eau et l'élément de support sont fixés l'un sur l'autre par un soudage à haute fréquence, un soudage sur plaque chauffante ou un soudage par ultrasons.

23. Bouilloire selon l'une quelconque des revendications 16 à 22, **caractérisée en outre en ce que** ledit indicateur de niveau d'eau comprend au moins un élément de canal (22A) destiné à recevoir au moins un élément d'arête (20A) dudit élément de support.

24. Bouilloire selon l'une quelconque des revendications 16 à 23, **caractérisée en outre en ce que** ledit élément de boîtier comprend au moins une partie recourbée (12A) reçue dans une cavité formée entre ledit indicateur de niveau d'eau et ledit élément de support.

25. Bouilloire selon l'une quelconque des revendications 17 à 24, **caractérisée en outre en ce que** ledit élément de boîtier comprend au moins une partie étagée (12B) reçue dans une cavité formée entre ledit indicateur de niveau d'eau et ledit élément de support.

26. Bouilloire selon l'une quelconque des revendications 16 à 25, **caractérisée en outre en ce que** ladite bague d'étanchéité possède une section transversale sensiblement circulaire.

27. Bouilloire selon l'une quelconque des revendications 16 à 25, **caractérisée en outre en ce que** ladite bague d'étanchéité possède une section transversale sensiblement rectangulaire.

28. Bouilloire selon l'une quelconque des revendications 16 à 25, **caractérisée en outre en ce que** ladite bague d'étanchéité possède une section transversale sensiblement en forme de U, avec deux éléments de bras.

29. Bouilloire selon la revendication 28, **caractérisée en outre en ce que** ledit élément de boîtier comprend au moins une partie recourbée (12A) reçue dans un espace situé entre les éléments de bras de ladite bague d' étanchéité.

30. Bouilloire selon la revendication 29, **caractérisée en outre en ce que** ledit élément de boîtier comprend au moins une partie étagée (12B) reçue dans un espace situé entre les éléments de bras de ladite bague d'étanchéité.
